# NEW EUROPEAN PATENT SPECIFICATION

(11) **EP 0 825 372 B2**
(45) Date of publication and mention of the opposition decision: **04.05.2005**
(45) Mention of the grant of the patent: 30.05.2001
(21) Application number: 96830451.9
(22) Date of filing: 19.08.1996
(51) Int. Cl.: F16K 31/68, G05D 23/02, F01P 7/16

(54) **Thermostatic valve assembly**
Thermostat-Ventilanordnung
Ensemble d'une vanne thermostatique

(43) Date of publication of application: 25.02.1998
(73) Proprietor: Behr Thermot-tronik Italia S.p.A., 10123 Torino (IT)
(72) Inventor: Triberti, Franco, 10024 Moncalieri (TO) (IT)
(74) Representative: Buzzi, Franco

(56) References cited:
- EP-A- 0 432 103
- EP-A- 0 600 150
- DE-A- 19 504 677
- DE-C- 4 416 240
- GB-A- 2 286 675

## Description

The present invention is generally related to a thermostatic valve assembly, of the type intended for instance to be employed for controlling the flow of the coolant liquid in an internal combustion engine for motor vehicles.

More particularly, the invention is directed to a thermostatic valve assembly including a pipe union formed with an annular valve seat, a hollow body formed with a tubular passage connected to the pipe union, and a valve unit controlling communication between said tubular passage of the hollow body and said pipe union and including a thermostatic element formed by a housing containing a heat-expansible material, a stem reacting against a bearing formed in said pipe union and onto which said housing is telescopically slidably coupled, a disk valve obturator axially fixed to the housing and cooperating with the annular seat valve of the pipe union, and a resilient thrust member axially interposed between the valve obturator and a transverse support member across which said housing is axially slidably guided.

In the current manufacturing a valve assemblies of the above-referenced type, the pipe union is conveniently made of moulded plastic material, preferably of high-resistance technopolymers, while the hollow body is normally - but not necessarily - made of metal, for instance of die-cast aluminium.

In such valve assemblies a retaining system must be provided for the transverse support member of the thermostatic element, acting as a guiding support for the housing carrying the disk obturator, and also as a reaction element for the related thrust spring.

In a known solution according to European patent application EP-A-0600150, the transverse support member of the thermostatic element has its opposite ends axially engaged, under the action of the resilient thrust member, onto respective bearing parts formed in integral legs of said pipe union and axially projecting within the tubular passage of the hollow body. More particularly, the ends of the transverse support member are substantially U bent, and are provided with respective terminal anchoring teeth engaging corresponding anchoring seats of said integral legs of the pipe union.

This solution, while affording the advantage of simplifying mounting of the valve unit relative to the pipe union, and thus the whole assembling of the thermostatic valve assembly, may lead to a critical inconvenience in case, exactly according to the current manufacturing trend, the pipe union made of moulded plastic material. In fact in this case the integral legs of the pipe union are in use hugely loaded under tensile stress, due to the action of the resilient thrust member, which may cause breakage thereof even after a short operation time. These breakages, further to involve inoperativeness of the thermostatic valve assembly with the consequences which can derive thereby, may produce introduction of solid fragments into the fluid circulating through the valve assembly, with the risk of further failures and damages of other components (pumps and the like) of the circuit.

According to GB-A-2286675 this risk would be prevented through the provision of axial support arms formed with the tubular passage of the hollow body, which are radially offset relative to the integral legs of the pipe union. In the assembled state of the thermostat according to this known solution, when the support arms come into contact with the transverse member, they raise it and remove the loading from the legs of the pipe union. The resilient thrust member reacting against the transverse member is then more compressed in the assembled position than in the non-assembled (i.e. in the storage) condition of the thermostat. This may involve difficulties in connection with accuracy of thermostat setting, which shall have to take into account the different spring preloading before and after assembling, respectively, thus affecting thermostat reliability.

The object of the present invention is to overcome the above drawback in a simple, practical and economical way, additionally enabling less valuable plastic material to be employed for the manufacturing of the pipe union.

A further object of the invention is to provide a valve assembly of the type set forth in the above which is adapted to ensure, in use, a higher reliability and safety degree even following a long operation time.

According to the invention, these objects are achieved by virtue of a thermostatic valve assembly such as defined in the preamble of claim 1, the main feature of which resides in that said tubular passage of the hollow body is formed with a pair of inwardly projecting opposite support seats having respective cavities for axial engagement of said integral legs of the pipe union.

Due to this idea of solution, the integral legs of the pipe union are in practice propped or as to say "armed", with particular reference to the tensile stresses applied thereto by the resilient thrust member through the transverse support member, which allows overcoming the above referenced inconveniences related to the prior art. This advantageous effect can be obtained both in case the hollow body is made of metal, and in the case same is also made of moulded plastic material.

According to a preferred embodiment of the invention, said support seats are arranged in immediate proximity of the ends of the transverse support member, on the side opposite to the resilient thrust member, and are conveniently delimited by peculiarly profiled edges performing with said transverse support member ends mutual angularly locked couplings.

Accordingly, even in the event - however remote - of breakage of one or both integral legs of the pipe union, operation of the thermostatic valve assembly is in any case safeguarded due to bearing of the transverse support member performed by the edges of the support seats of the hollow body tubular passage. In such event, any fragment shall also be retained within these support seats thus preventing the risk of penetration thereof into the fluid circulating through the valve assembly.

The invention will now be disclosed in detail with reference to the accompanying drawings, purely provided by way of non-limiting example in which:

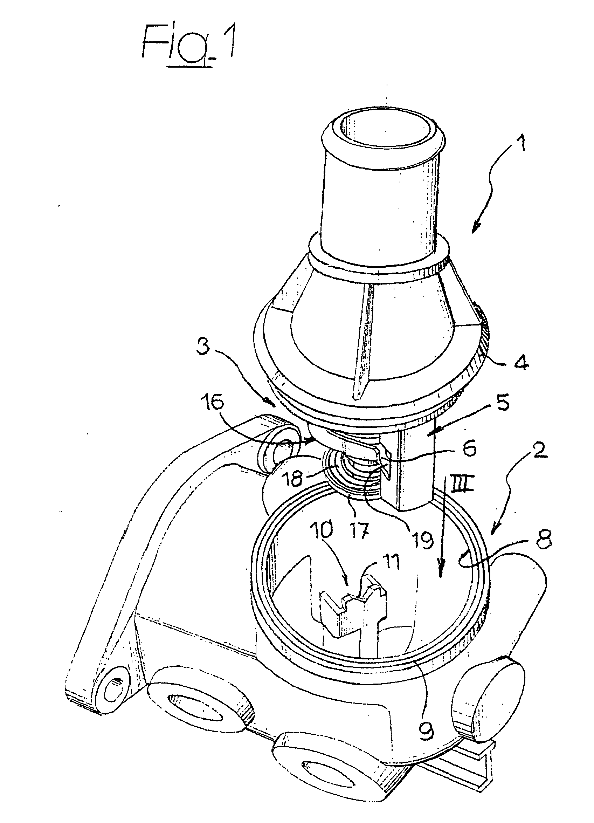

figure 1 is a perspective exploded view diagrammatically showing a thermostatic valve assembly according to the invention,
figure 2 is a partially axially sectioned view of the valve assembly of figure 1,
figure 3 is a top plan view according to arrow III of figure 1, and
figure 4 is a perspective view showing in an enlarged view the particular indicated by arrow IV in figure 2.

Referring to the drawings, a thermostatic valve assembly according to the invention essentially comprises a pipe union or connector 1 made of moulded plastic material (for instance glass-reinforced polyamide resin "66"), a hollow body 2 normally made of die-cast aluminium (or even made of high-resistance moulded plastic material), and a thermostatic valve unit generally designated as 3.

The pipe union 1 is provided with an enlarged base portion 4, having a circular shape, within which an annular valve seat, not depicted in the drawings, is conventionally formed.

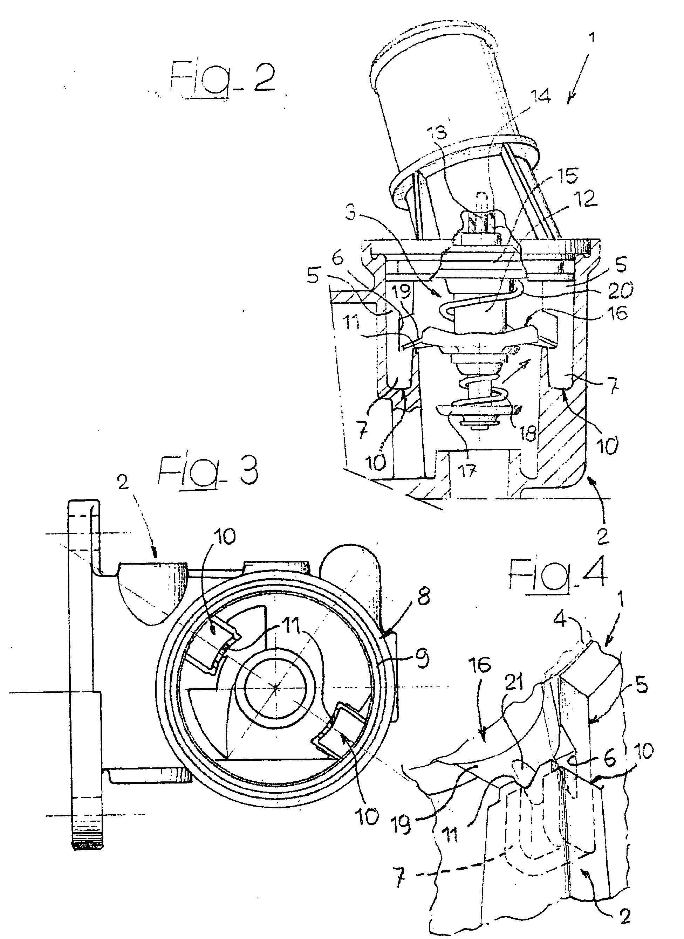

Beneath the enlarged base 4, the pipe union 1 is provided with a pair of diametrically opposed and axially elongated legs 5, formed with respective juxtaposed seats 6. As shown in better detail in figure 4 with dotted lines, the terminal portions of the legs 5 which project beyond the seats 6, indicated as 7, have a channelled configuration.

The hollow body 2 such as depicted in the drawings is purely indicative, since it may have any different configuration. Generally, the body 2 is provided with inlet-outlet passages for circulation of a liquid, for instance the coolant of an internal combustion engine, and is thus conventionally designed for its connection to the circuit of that fluid.

In connection with the present invention, it is sufficient that the body 2 be formed with a tubular passage 8 having an outer flange 9 (or any other equivalent system) for axial coupling thereof with the base 4 of the pipe union 1.

According to the fundamental feature of the invention, the tubular passage 8 of the hollow body 2 is formed with a pair of diametrically opposed support seats 10, whose function shall be clarified herebelow, which are projecting towards the interior of the tubular passage 8 at a predetermined distance from the outer flange 9 thereof. The two support seats 10 are integrally formed upon die-casting or moulding of the hollow body 2, respectively, in the case same is made of aluminium or of plastic material. These seats 10 have a substantial axial depth, and are opened at their ends facing towards the outer flange 9. Towards the interior of the cavity of the tubular passage 8, these ends of the support seats 10 are each delimited by a profiled edge 11 which, in the case of the illustrated example, is formed as a substantially V-shaped recess. However, as it will be further clarified in the following, this configuration of the edges 11 is not to be considered in a limiting way.

The valve unit 3 is of a generally conventional type, and substantially corresponds from both the structural and the functional point of view to the one disclosed in already mentioned document EP-A-0600150. As far as the present invention is concerned, it is sufficient to clarify that the valve unit 3 comprises a cylindrical housing 12 containing a heat-expansible material (for instance wax), and a stem 13 reacting axially against a front bearing 14, integrally formed inside the pipe union 1, and on which the housing 12 is slidably coupled telescopically. A disk valve obturator 15 is axially fixed to the housing 12, which is adapted to cooperate with the annular valve seat formed within the base 4 of the pipe union 1. This disk obturator 15 is subjected to the axial thrust of a helical compression spring 20 interposed between the valve obturator 15 and a transverse support member 16, across which the housing 12 is slidably guided axially.

The thermostatic element 3 can be further provided with a second disk obturator 17 and associated thrust spring 18, arranged on the side opposite to the disk obturator 15.

The transverse support member 16 is formed with shaped opposite ends 19 which are fitted within the respective seats 6 of the integral legs 5 of the pipe union 1, so as to keep the thrust spring 20 in a pre-compressed condition. As it is shown in better detail in figure 4, each end 19 of the transverse support member 16 (which is normally made of metal) has a shape complementary to that of the edge 11 of a respective support seat 10 of the hollow body 2. In the shown example, each end 19 is formed with a substantially V-shaped projection 21.

In the mounted condition shown in figure 2 of the thermostatic valve assembly according to the invention, the pipe union 1 is coupled onto the tubular passage 8 of the hollow body 2, with its base 4 resting upon the outer flange 9. The two integral legs 5 are positioned in angular correspondence of the support seat 10 of the hollow body 2, and axially project within the tubular passage 8 thereof, with their ends 7 fitted within these support seats 10. In this position, the transverse support member 16 is located immediately above the support seats 10, and the projections 21 of the ends 19 of the transverse support member 16 bear against the edges 11 of the seats 10, so as to provide a steady and angularly locked coupling of the transverse support member 16 relative to the tubular passage 8, under the bias of the spring 20.

The free end of the stem 13 is engaged with the front bearing 14 of the pipe union 1, and the disk obturator 15 is normally closed against the annular valve seat of the base 4.

In operation, when the temperature within the tubular passage 8 reaches a pre-determined value, the heat-sensitive material contained within the housing 12 expands, thus causing axial displacement of the latter in the direction opposite to the pipe union 1, and consequent separation of the disk obturator 15 relative to the valve seat, against the action of the spring 20. The flow path between the pipe union 1 and the hollow body 2 is thus opened.

The provision of the support seats 10 engaged by the free ends of the integral legs 5 enables to appreciably reduce the risk of breakage of these legs 5 due to the tensile stresses applied thereto by the transverse support member 16, under the action of the thrust spring 20. On the other hand, in the however remote event of breakages, correct operation of the thermostatic element 3 would anyhow be safeguarded, by virtue of the direct abutment between the ends 19 of the transverse support member 16 and the edges 11 of the support seats 10. Moreover, in such event, any fragments of the integral legs 5 (normally the free ends 7 thereof) would remain within the support seat 10, thus substantially preventing the risk that these fragments may be introduced into the fluid circulating through the thermostatic valve assembly.

Naturally the details of construction and the embodiments may be widely varied with respect to what has been disclosed and illustrated, without thereby departing from the scope of the present invention, such as defined in the appended claims. Thus, for instance, the recessed design of the edges 11 of the support seat 10 and the complementary projecting design 21 of the ends 19 of the transverse support members 16 could be reversed, or anyway different, provided that a firm mutual coupling therebetween is ensured.

## Claims

1. A thermostatic valve assembly including a pipe union (1) formed with an annular valve seat (4), a hollow body (2) formed with a tubular passage (8) connected to said pipe union (1), and a valve unit (3) controlling communication between said tubular passage (8) of the hollow body (2) and said pipe union (1) and including a thermostatic element formed by a housing (12) containing a heat-expansible material, a stem (13) reacting against a bearing (14) formed in said pipe union (1) and onto which said housing (12) is telescopically slidably coupled, a disk valve obturator (15) axially fixed to the housing (12) and cooperating with said annular valve seat (4) of the pipe union (1), and a resilient thrust member (20) axially interposed between said valve obturator (15) and a transverse support member (16) across which said housing (12) is axially slidably guided, wherein said transverse support member (16) has opposite ends (19) axially engaged, under the action of said resilient thrust member (20), onto respective bearing parts (7) formed in integral legs (5) of said pipe union (1) axially projecting into said tubular passage (8) of the hollow body (2), **characterised in that** said tubular passage (8) of the hollow body (2) is formed with a pair of inwardly projecting opposite support seats having respective cavities (10) for axial engagement of said integral legs (5) of the pipe union (1).

2. Thermostatic valve assembly according to claim 1, **characterised in that** said support seats (10) are arranged in immediate proximity of said ends (19) of the transverse support member (16), on the side opposite to said resilient thrust member (20).

3. Thermostatic valve assembly according to claim 2, **characterised in that** said support seats (10) are delimited by profiled edges (11) performing with said ends (19) of the transverse support member (16) mutual angularly locked couplings.

4. Thermostatic valve assembly according to claim 3, **characterised in that** said angularly locked couplings are defined by complementary recessed and projecting surfaces of said edges (11) of the support seats (10) and of said ends (19) of the transverse support member (16).

5. Thermostatic valve assembly according to any of the preceding claims, **characterised in that** said pipe union (1) is made of moulded plastic material.

## Patentansprüche

1. Thermostat-Ventilanordnung, umfassend eine mit einem ringförmigen Ventilsitz (4) ausgebildete Rohrverbindung (1), einen Hohlkörper (2), der mit einem mit der Rohrverbindung (1) verbundenen, röhrenförmigen Durchgang (8) ausgebildet ist, und eine Ventileinheit (3), die die Verbindung zwischen dem röhrenförmigen Durchgang (8) des Hohlkörpers (2) und der Rohrverbindung (1) steuert und umfaßt ein Thermostatelement, das durch ein sich durch Hitze ausdehnbares Material enthaltendes Gehäuse (12) ausgebildet wird, einen Stab (13), der einem in der Rohrverbindung (1) ausgebildeten Lager (14) entgegenwirkt und auf dem das Gehäuse (12) zusammenschiebar gleitend gekoppelt ist, ein Scheibenventilabsperrmittel (15), das axial an dem Gehäuse (12) befestigt ist und mit dem ringförmigen Ventilsitz (4) der Rohrverbindung (1) zusammenwirkt, und ein elastisches Druckstück (20), das axial zwischen dem Ventilabsperrmittel (15) und einem transversal verlaufenden Trägerelement (16) angeordnet ist, über das das Gehäuse (12) axial verschiebbar geführt wird, wobei das transversal verlaufende Trägerelement (16) gegenüberliegende Enden (19) aufweist, die axial unter der Wirkung des elastischen Druckstücks (20) auf entsprechenden Lagerteilen (7) in Eingriff stehen, die in den einstückigen Schenkeln (5) der Rohrverbindung (1), die in den röhrenförmigen Durchgang (8) des Hohlkörpers (2) axial vorspringen, ausgebildet sind, **dadurch gekennzeichnet, dass** der röhrenförmige Durchgang (8) des Hohlkörpers (2) mit einem Paar von nach innen vorspringenden, gegenüberliegenden Trägersitzen (10) mit je einer Ausnehmung zum axialen Eingriff der einstückigen Schenkel (5) der Rohrverbindung (1) ausgebildet ist.

2. Thermostat-Ventilanordnung gemäß Anspruch 1, **dadurch gekennzeichnet, dass** die Trägersitze (10) in unmittelbarer Nähe der Enden (19) des transversal verlaufenden Trägerelements (16) auf der zu dem elastischen Druckstück (20) gegenüberliegenden Seite angeordnet sind.

3. Thermostat-Ventilanordnung gemäß Anspruch 2, **dadurch gekennzeichnet, dass** die Trägersitze (10) durch Formkanten (11) begrenzt sind, die mit den Enden (19) des transversal verlaufenden Trägerelements (16) wechselseitige, winklig eingerastete Kopplungen durchführen.

4. Thermostat-Ventilanordnung gemäß Anspruch 3, **dadurch gekennzeichnet, dass** die winklig eingerasteten Kopplungen durch komplementär vertiefte und vorspringende Oberflächen der Kanten (11) der Trägersitze (10) und der Enden (19) des transversal verlaufenden Trägerelements (16) definiert sind.

5. Thermostat-Ventilanordnung gemäß einem der vorstehenden Ansprüche, **dadurch gekennzeichnet, dass** die Rohrverbindung (1) aus geformtem Kunststoffmaterial hergestellt ist.

## Revendications

1. Ensemble à clapet thermostatique comprenant un raccord de tube (1) formé avec un siège annulaire (4) d'obturateur, un corps creux (2) formé avec un passage tubulaire (8) raccordé au raccord de tube (1), et une unité à clapet (3) commandant la communication entre le passage tubulaire (8) du corps creux (2) et le raccord de tube (1) et comprenant un élément thermostatique formé par un boîtier (12) contenant un matériau qui se dilate sous l'action de la chaleur, une tige (13) qui réagit contre un appui (14) formé dans le raccord de tube (1) et sur laquelle le boîtier (12) est accouplé afin qu'il coulisse télescopiquement, un obturateur (15) de clapet en forme de disque fixé axialement sur le boîtier (12) et coopérant avec le siège annulaire (4) de clapet du raccord de tube (1), et un organe élastique de poussée (20) disposé axialement entre l'obturateur (15) de clapet et un organe transversal de support (16) sur lequel le boîtier (12) est guidé axialement par coulissement, dans lequel l'organe transversal de support (16) a des extrémités opposées (19) qui coopèrent axialement, sous l'action de l'organe élastique de poussée (20), avec des parties respectives (7) d'appui formées dans des branches solidaires (5) du raccord de tube (1) dépassant axialement dans le passage tubulaire (8) du corps creux (2), **caractérisé en ce que** le passage tubulaire (8) du corps creux (2) est formé avec une paire de sièges opposés (10) de support dépassant vers l'intérieur ayant des cavités respectives et destinés à coopérer axialement avec les branches solidaires (5) du raccord de tube (1).

2. Ensemble à clapet thermostatique selon la revendication 1, **caractérisé en ce que** les sièges (10) de support sont placés à proximité immédiate des extrémités (19) de l'organe transversal de support (16) du côté opposé à l'organe élastique de poussée (20).

3. Ensemble à clapet thermostatique selon la revendication 2, **caractérisé en ce que** les sièges (10) de support sont délimités par des bords profilés (11) formant des accouplements mutuels bloqués angulairement avec les extrémités (19) de l'organe transversal (16) de support.

4. Ensemble à clapet thermostatique selon la revendication 3, **caractérisé en ce que** les accouplements bloqués angulairement sont délimités par des surfaces complémentaires en creux et en saillie des bords (11) des sièges (10) de support et des extrémités (19) de l'organe transversal (16) de support.

5. Ensemble à clapet thermostatique selon l'une quelconque des revendications précédentes, **caractérisé en ce que** le raccord de tube (1) est formé de matière plastique moulée.
